# EUROPEAN PATENT SPECIFICATION

(11) **EP 2 357 761 B1**
(45) Date of publication and mention of the grant of the patent: **07.05.2014**
(21) Application number: 09825736.3
(22) Date of filing: 05.08.2009
(51) Int. Cl.: H04L 29/06, H04L 29/12

(54) **Proxy method of media stream, voice exchanger and communication system**
Agentensystem von Medienflüssen, Sprachtauscher und Kommunikationssystem
Procédé avec proxy de flux multimédia, échangeur vocal et système de communication

(30) Priority: 11.11.2008 CN 200810172733
(43) Date of publication of application: 17.08.2011
(73) Proprietor: Huawei Technologies Co., Ltd., Shenzhen, Guangdong 518129 (CN)
(72) Inventor: YANG, Hengzong, Guangdong 518129 (CN)
(74) Representative: Körber, Martin Hans
(86) International application number: PCT/CN2009/073094
(87) International publication number: WO 2010/054561

(56) References cited:
- CN-A- 1 633 102
- CN-A- 1 878 175
- CN-A- 1 968 181
- ROSENBERG CISCO R MAHY PLANTRONICS P MATTHEWS (UNAFFILIATED) J: "Traversal Using Relays around NAT (TURN): Relay Extensions to Session Traversal Utilities for NAT (STUN); draft-ietf-behave-turn-11.txt", TRAVERSAL USING RELAYS AROUND NAT (TURN): RELAY EXTENSIONS TO SESSION TRAVERSAL UTILITIES FOR NAT (STUN); DRAFT-IETF-BEHAVE-TURN-11.TXT, INTERNET ENGINEERING TASK FORCE, IETF; STANDARDWORKINGDRAFT, INTERNET SOCIETY (ISOC) 4, RUE DES FALAISES CH- 1205, vol. behave, no. 11, 29 October 2008 (2008-10-29), XP015057939,
- ROSENBERG CISCO J: "Interactive Connectivity Establishment (ICE): A Protocol for Network Address Translator (NAT) Traversal for Offer/Answer Protocols; draft-ietf-mmusic-ice-19.txt", 20071029, vol. mmusic, no. 19, 29 October 2007 (2007-10-29), XP015053583, ISSN: 0000-0004

## Description

### TECHNICAL FIELD

The present invention relates to the field of communication technology, and more particularly to a proxy method of a media stream, a voice exchanger, and a communication system.

### BACKGROUND

With the increasing shortage of public network Internet Protocol (IP) addresses, more and more private network addresses are used to effectively multiplex repetitive IP address segments. IP addresses in signaling protocols are private, and private IP addresses cannot be routed in a public network, which results in that Net Address Translation (NAT) isolation exists in communication between an enterprise private network address and the public network, so that a private network cannot communicate with the public network. NAT traversal is an approach to solve the isolation, that is, a Medium Access Control (MAC), an IP address and a port of an IP packet header are replaced with each other between the public network and the private network. However, the address of data information is not replaced in the NAT traversal, so when two terminals are conversing by media streams, one terminal cannot visit another terminal within the private network through a private network IP address, and the NAT traversal still causes a case that a normal conversation cannot be made in a Voice Over IP (VOIP) environment.

A variety of methods can be provided to solve the problem of NAT traversal in conversation. Because of not influencing original networking and supporting such characteristics as multi-level NAT, PROXY technology has certain advantages. The PROXY technology mainly includes a signal flow proxy and a media stream proxy. In general, the problem of NAT traversal in the VOIP environment can only be solved by combining the signal flow proxy and the media stream proxy.

In the prior art, a Session Border Controller (SBC) device is used to realize a universal PROXY technology. After power-on, a user A's device and a user B's device register with a voice exchanger through an SBC signal proxy. When the user A initiates a conversation with the user B, signaling is exchanged through the SBC signal proxy, and the voice exchanger accomplishes establishment of a conversation signaling. During a call, after receiving a media stream message of the user A, an SBC A establishes one new mapping relationship for a user A's address and port, which have gone through a NAT device, and an SBC A's address and port of the media stream proxy. The SBC A sends the media stream message to an SBC B, and the SBC B likewise sends a media stream message to the SBC A. The SBC A forwards the received media stream message to the user A in the private network, and likewise, the SBC B forwards the received media stream message to the user B in the private network.

The prior art has at least the following disadvantages:
In the prior art, when using the PROXY technology to solve the problem of the NAT traversal in the VOIP environment, a specific proxy device is needed, such as SBC, which causes a high cost and a complex proxy method.

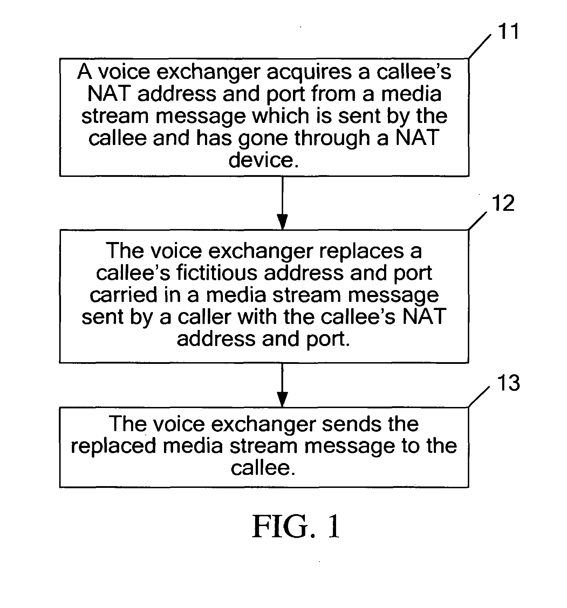

ROSENBERG CISCO R MAHY PLANTRONICS P MATTHEWS (UNAFFILIATED) J:" Traversal Using Relays around NAT (TURN): Relay Extensions to Session Traversal Utilities for NAT (STUN); draft-ietf behave-turn-11" defines a protocol, called TURN (Traversal Using Relays around NAT), that allows a host (i.e. TURN client in figure 1) to control operation of a relay (i.e. TURN server in figure 1) and to exchange packets with its peers using the relay.

ROSENBERG CISCO J: "Interactive Connectivity Establishment (ICE): A Protocol for Network Address Translator (NAT) Traversal for Offer/Answer Protocols draft-ietf-mmusic-ice-19" describes a protocol for Network Address Translator (NAT) traversal for UDP-based multimedia sessions established with the offer/answer model.

### SUMMARY

Embodiments of the present invention provide a proxy method of a media stream, a voice exchanger, and a communication system, and the technical solution according to embodiments of the present invention enables the voice exchanger to realize a media stream proxy function.

The purpose of the embodiments of the present invention is realized through the following technical solution.

A proxy method of a media stream is provided, which includes the following steps.

A voice exchanger generates a callee's fictitious address and port, after receiving a signaling translated and sent by a NAT device when a caller initiates a conversation with the callee;

The voice exchanger sends the callee's fictitious address and port to the registered caller, so that the caller sends a media stream message carrying the callee's fictitious address and port to the callee;

The voice exchanger acquires the callee's NAT address and port from a media stream message which is sent by the callee and has gone through a NAT device.

The voice exchanger replaces the callee's fictitious address and port carried in a media stream message sent by the caller with the callee's NAT address and port.

The voice exchanger sends the replaced media stream message to the callee. The replaced media stream message includes the callee's NAT address and port.

A voice exchanger is provided, which includes a construction unit, a sending unit, an acquisition unit, a replacement unit, and a forwarding unit.

The construction unit is configured to generate a callee's fictitious address and port, after receiving a signaling translated and sent by a NAT device when a caller initiates a conversation with the callee;

The sending unit is configured to send the callee's fictitious address and port to the registered caller;

The acquisition unit is configured to acquire the callee's NAT address and port from a media stream message which is sent by the callee and has gone through a NAT device.

The replacement unit is configured to replace the callee's fictitious address and port carried in a media stream message sent by the caller with the callee's NAT address and port acquired by the acquisition unit.

The forwarding unit is configured to send the replaced media stream message replaced by the replacement unit to the callee, wherein the replaced media stream message includes the callee's NAT address and port.

It can be seen from the technical solution according to the embodiments of the present invention that, the voice exchanger replaces a callee's fictitious address and port carried in a media stream message sent by a caller with the callee's NAT address and port, and sends the replaced media stream message to the callee, so that the conversation isolation problem can be solved by only using a media stream proxy, thus simplifying the proxy method. Hence, the media stream proxy can be realized without the need of using a dedicated proxy device, so as to solve the conversation isolation problem and reduce the cost.

### BRIEF DESCRIPTION OF THE DRAWINGS

To make the technical solution under the present invention clearer, the accompanying drawings for illustrating the embodiments of the present invention or the prior art are outlined below. Apparently, the accompanying drawings are for the exemplary purpose only, and person having ordinary skill in the art can derive other drawings from such accompanying drawings without any creative effort.
FIG. 1 is a flow chart of a proxy method of a media stream according to an embodiment of the present invention;
FIG. 2 is a flow chart of a proxy method of a media stream according to a first embodiment of the present invention;
FIG. 3 is a schematic view of networking in which a user registers with a voice exchanger according to an embodiment of the present invention;
FIG. 4 is a schematic view of networking in which a voice exchanger realizes a media stream proxy according to an embodiment of the present invention;
FIG. 5 is a flow chart of a proxy method of a media stream according to a fourth embodiment of the present invention;
FIG. 6 is a schematic structural view of a voice exchanger according to an embodiment of the present invention; and
FIG. 7 is a structural block view of a communication system according to an embodiment of the present invention.

### DETAILED DESCRIPTION OF THE EMBODIMENTS

The following detailed description is directed to the technical solution of the present invention with reference to the accompanying drawings. However, the embodiments to be described are only part of, rather than all of, the embodiments of the present invention. Persons having ordinary skill in the art can derive other embodiments from the embodiments given herein without making any creative effort, and all such embodiments are covered in the scope of the present invention.

In embodiments, the present invention provides a proxy method of a media stream, a voice exchanger, and a communication system, and using the technical solution according to the embodiments of the present invention enables the voice exchanger to realize a media stream proxy function.

In the embodiments of the present invention, a PROXY technology is used in the voice exchanger, a media stream PROXY technology is used to construct a simple mapping table, and the media stream is quickly forwarded, so as to solve the problem of NAT traversal in a VOIP conversation. Furthermore, because no dedicated proxy device is used, the networking cost is reduced.

A callee mentioned in the embodiments of the present invention can be a single user or multiple users. In the embodiments of the present invention, the callee being a single user is only set forth as an example, but the present invention is not limited to that the callee is the single user. When the callee is the multiple users, its idea is similar to that mentioned in the embodiments of the present invention, and is not repeated any more in the embodiments of the present invention.

Referring to FIG. 1, a proxy method of a media stream according to an embodiment of the present invention can include the following steps. In Step 11, a voice exchanger acquires a callee's NAT address and port from a media stream message which is sent by the callee and has gone through a NAT device. In Step 12, the voice exchanger replaces a callee's fictitious address and port carried in a media stream message sent by a caller with the callee's NAT address and port. In Step 13, the voice exchanger sends the replaced media stream message to the callee. The replaced media stream message includes the callee's NAT address and port.

In the solution, because the voice exchanger replaces the callee's fictitious address and port carried in the received media stream message sent by a caller with the callee's NAT address and port, and sends the replaced media stream message to the callee, the conversation isolation problem is solved by only using a media stream proxy, thus simplifying the proxy method. Hence, the media stream proxy can be realized without the need of using a specific proxy device, so as to solve the conversation isolation problem and reduce the cost.

### Embodiment 1

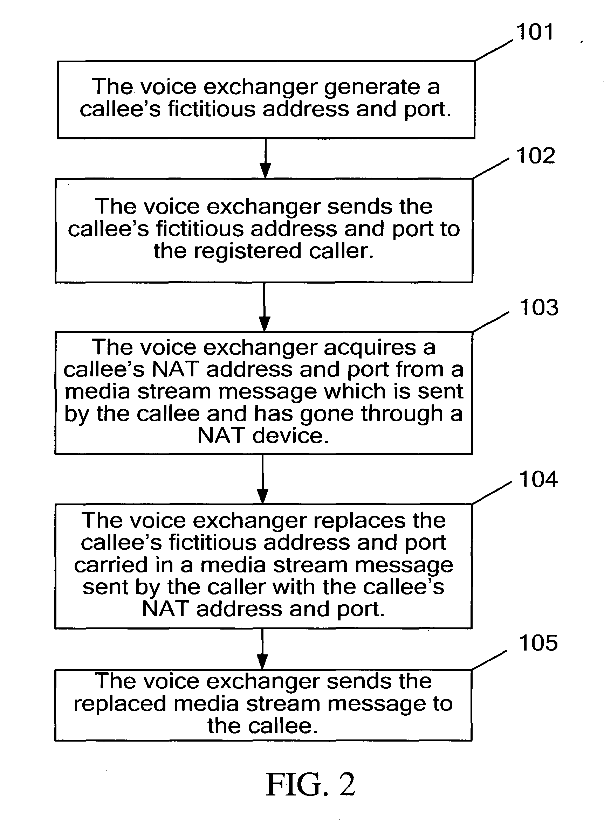

This embodiment describes a proxy method of a media stream. Referring to FIG. 2, the method can include the following steps.

In Step 101, when a caller initiates a conversation with a callee, signaling is translated by an NAT device and then sent to a voice exchanger, and the voice exchanger generate a callee's fictitious address and port.

The callee's fictitious address and port are corresponding to the callee's NAT address and port. The callee had registered.

Before Step 101, the voice exchanger acquires the callee's NAT address and port from a media stream message which is sent by the registered callee and has gone through a NAT device.

In Step 102, the voice exchanger sends the callee's fictitious address and port to the registered caller.

The voice exchanger generates a caller's fictitious address and port and sends the caller's fictitious address and port to the callee. In this way, the caller and the callee may get informed of the address of a conversation opposite end, that is, address of the conversation opposite end on the voice exchanger. For example, a callee's address and port on the voice exchanger obtained by the caller are (10.0.0.40:7000), and a caller's address and port on the voice exchanger obtained by the callee are (10.0.0.40:7002). Definitely, these addresses and ports are generated by the voice exchanger. When a media stream message is sent between the caller and the callee subsequently, the media stream message can be sent to the opposite end's fictitious address and port which are generated by the voice exchanger.

In Step 103, the voice exchanger acquires a callee's NAT address and port from a media stream message which is sent by the callee and has gone through a NAT device.

After determining that the media stream message sent by the callee is a media stream proxy service, the voice exchanger acquires the callee's NAT address and port, and saves the information in a mapping table.

In Step 104, the voice exchanger replaces the callee's fictitious address and port carried in a media stream message sent by the caller with the callee's NAT address and port.

Before the Step 104, the voice exchanger receives the media stream message sent by the caller. The media stream message carries the callee's fictitious address and port. The callee's fictitious address and port are generated by the voice exchanger in the Step 101.

Because media streams exchanged by the voice exchanger further include a conversation between a narrowband and a broadband besides a media stream proxy, the media stream proxy service is isolated from a narrowband/narrowband conversation service port interval. In this way, after receiving the media stream message sent by the caller, the voice exchanger further needs to determine whether the media stream message is the media stream proxy service according to the callee's port included in the message. It can be determined according to destination port of the received message, and here, it is determined according to the callee's port. If the media stream message is the media stream proxy service, the caller's NAT address and port in the message which has gone through a NAT device are saved in the mapping table, the callee's NAT address and port in the mapping table is obtained according to the callee's fictitious address and port acting as an index, and the callee's fictitious address and port in the media stream message are replaced with the callee's NAT address and port.

The callee's NAT address and port can be obtained from the mapping table according to a preset port binding relationship. The port binding relationship, that is, binding ports of conversation, such as 7000 and 7002, establishes a mapping table indexed according to port.

Before the replacing, the voice exchanger further needs to determine whether the callee's NAT address and port has been obtained. If yes, Step 104 is executed. Otherwise, the media stream message sent by the caller is discarded.

In Step 105, the voice exchanger sends the replaced media stream message to the callee.

The voice exchanger sends the replaced media stream message sent by the caller to the callee. The replaced media stream message includes the callee's NAT address and port.

The voice exchanger sends the replaced media stream message to the NAT device corresponding to the callee. The media stream message includes the callee's NAT address and port. The NAT device corresponding to the callee then forwards the media stream message to the callee. In this way, the callee can receive the media stream sent by the caller.

The voice exchanger generates the caller's fictitious address and port and sends them to the registered callee. The caller's fictitious address and port carried in a media stream message sent by the callee are replaced with the caller's NAT address and port. The voice exchanger sends the replaced media stream message sent by the callee to the caller. The NAT device corresponding to the caller forwards the replaced media stream message to the caller. Thus media stream exchange between the caller and the callee is realized.

According to this embodiment, the conversation isolation problem is solved by only using a media stream proxy, thus simplifying the proxy method. Hence, only the voice exchanger is used, and the media stream proxy can be realized without the need of using a dedicated proxy device, so as to solve the conversation isolation problem and reduce the cost.

Further, the callee's NAT address and port is acquired according to a port index, and can be directly acquired without the need of looking up the table according to a simple mapping relationship, which is convenient for maintenance, increases the translation speed, and reduces time delay.

The embodiment one describes a proxy method of a media stream, and the following embodiment two describes a method that a caller and a callee register with a voice exchanger by a signal flow proxy.

### Embodiment 2

The caller and the callee are users located in a private network, while the voice exchanger locates in a VOIP network. The caller and the callee can realize a conversation through the voice exchanger, and an NAT device locates between the private network and the VOIP network, which can be such devices as a firewall.

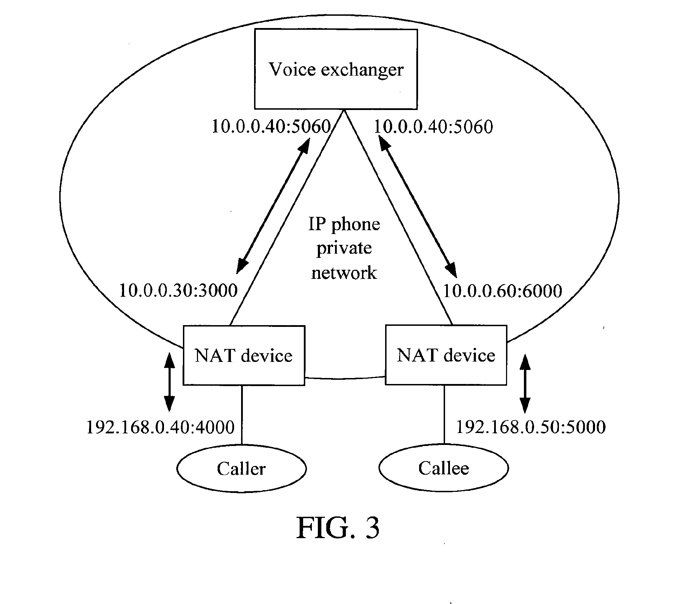

Referring to FIG. 3, a drawing of networking in which the caller and the callee register with the voice exchanger through the NAT device is shown. After power-on, the caller and the callee register with the voice exchanger. After receiving an address which has been translated by the NAT device, the voice exchanger exchanges a registration signaling with the caller's NAT address and the callee's NAT address, and sends a registration addresses to the caller and the callee through the NAT device. The registration is accomplished. The registration signaling received by the voice exchanger comes from the NAT device, that is, the caller's address and the callee's address which are translated are considered as addresses of the caller and the callee, while the registration address is considered as the address of the voice exchanger.

For example, a caller's address and port in the private network is (192. 168. 0. 40: 4000), and a caller's NAT address and port, i.e. a caller's address and port translated by the NAT device, is (10. 0. 0. 30: 3000). A callee's address and port in the private network is (192.168.0.50: 5000), and a callee's NAT address and port is (10.0.0.60: 6000). After the caller and the callee register in the voice exchanger, the caller and the callee know that an address of the registered voice exchanger is (10.0.0.40: 5060).

The second embodiment describes a registration method of a caller and a callee, and a third embodiment describes a method for sending a media stream message between a caller and a callee by adopting a media stream proxy.

### Embodiment 3

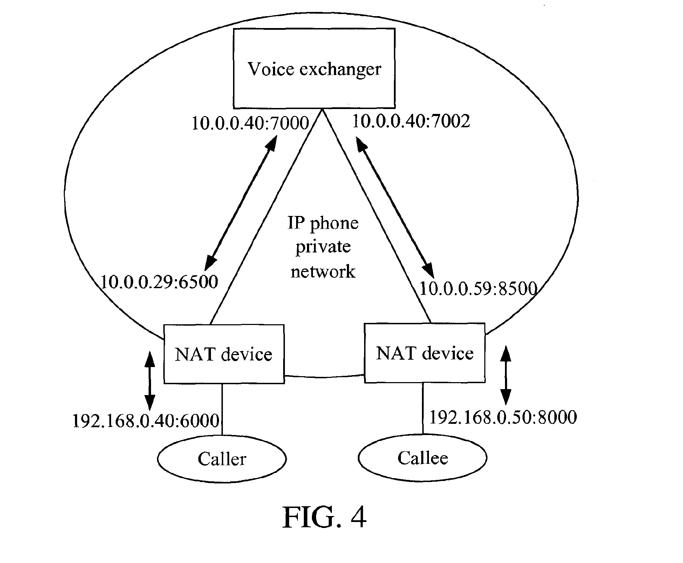

Referring to FIG. 4, a drawing of networking in which a voice exchanger realizes a media stream proxy is shown. The voice exchanger considers itself as the caller to generate a callee's fictitious address and port such as (10.0.0.40:7000), and sends signaling of a conversation established by the caller to an NAT device corresponding to the callee, and then the NAT device forwards the signaling to the callee. The callee also needs to send the signaling to the voice exchanger through the NAT device. The voice exchanger also considers itself as the callee to generate a caller's fictitious address and port such as (10.0.0.40:7002), and sends signaling of a conversation to the NAT device corresponding to the caller which forwards the information to the caller. In this way, the caller and the callee respectively obtain the address and port of a conversation opposite end on the voice exchanger. For example, the address and the port of the callee on the voice exchanger obtained by the caller are (10.0.0.40:7000), and the address and the port of the caller on the voice exchanger obtained by the callee are (10.0.0.40:7002). However, at this time, the voice exchanger does not know what a media stream address of a user after being translated by the NAT is, which needs to be obtained when the media stream proxy receives a media stream sent to an opposite end.

How a media stream message is sent between the caller and the callee is set forth hereinafter in combination with FIG.3. Taking FIG. 4 as an example, an address and port of the caller in a private network is (192.168.0.40: 6000), and a caller's NAT address and port, which has been translated by the NAT device, is (10.0.0.29: 6500). An address and port of the callee in the private network is (192.168.0.50: 8000), and a callee's NAT address and port, which has been translated by the NAT device, is (10.0.0.59: 8500). When the caller initiates a conversation with the callee, the voice exchanger generates a caller's fictitious addresses and port, and a callee's fictitious addresses and port respectively. For example, the callee's fictitious address and port is (10.0.0.40:7000), and the caller's fictitious address and port is (10.0.0.40:7002). After generating the addresses and port, the voice exchanger sends the caller's fictitious address and port to the callee and sends the callee's fictitious address and port to the caller, so that the caller and the callee know the addresses when the media stream message needs to be sent between the two. When generating the fictitious address and port of the caller and the callee, the voice exchanger binds the fictitious ports of the caller and the callee, such as 7000 and 7002, and establishes a mapping table. The mapping table can be indexed according to a port, so that subsequently, it is capable of determining whether a message is the media stream message according to the port. When the caller sends the media stream message to the callee, the media stream message carries the callee's fictitious address and port such as (10.0.0.40:7000). After receiving the media stream message, the voice exchanger can know that the message is a media stream proxy message according to the fictitious port as an index. At this time, the voice exchanger obtains the caller's NAT address and port (10.0.0.29: 6500) according to the media stream message sent by the caller, and saves the caller's NAT address and port in the mapping table. Likewise, when the callee sends the media stream message to the caller, if it is determined that the message is the media stream proxy message, the voice exchanger obtains the callee's NAT address and port (10.0.0.59: 8500) according to the media stream message sent by the callee, and saves the callee's NAT address and port in the mapping table. If the voice exchanger does not obtain the callee's NAT address and port when the caller sends the media stream message to the callee, the voice exchanger discards the message. If the callee's NAT address and port (10.0.0.59: 8500) has been obtained, the voice exchanger reads the callee's NAT address and port (10.0.0.59: 8500) in the mapping table according to the callee's fictitious port in the media stream message sent by the caller as the index, replaces the callee's fictitious address and port (10.0.0.40:7000) carried in the media stream message sent by the caller with the callee's NAT address and port (10.0.0.59: 8500), and sends the replaced media stream message to the callee through the NAT device corresponding to the callee. Operations of the voice exchanger for sending the media stream message sent from the callee to the caller are similar to those in the foregoing, and are not repeated any more here.

### Embodiment 4

This embodiment describes a proxy method of a media stream. Through the method, a normal conversation and normal data transmission can be realized between a caller and a callee.

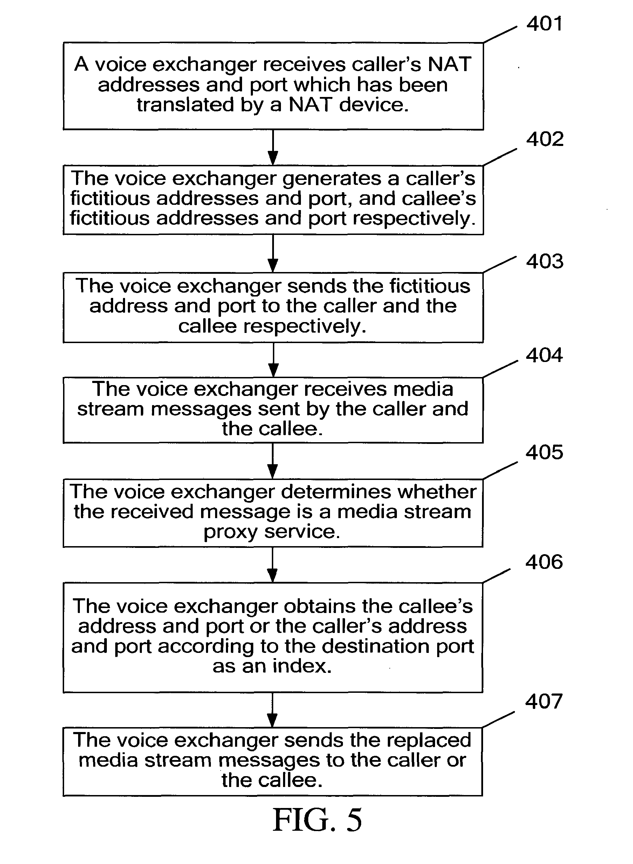

The method is illustrated in detail hereinafter in combination with an accompanying drawing. Referring to FIG. 5, the method can include the following steps.

In Step 401, a voice exchanger receives a registered caller's NAT addresses and port which have been translated by a NAT device when the registered caller establishes a conversation with a registered callee.

Specific realization for registration is the same as that in the embodiment 1, and is not repeated any more here.

In Step 402, the voice exchanger generates a caller's fictitious addresses and port, and a callee's fictitious addresses and port respectively.

For example, referring to FIG. 4, a drawing of networking in which a media stream proxy is adopted to realize a conversation and exchange of a media stream message between the caller and the callee is shown. When the caller initiates the conversation with the callee, an address of the caller in a private network is (192.168.0.40: 6000), and a caller's NAT addresses and port which has been translated by the NAT device is (10.0.0.29: 6500). An address of the callee in the private network is (192.168.0.50: 8000), and a callee's NAT addresses and port which has been translated by the NAT device is (10.0.0.59: 8500). When receiving a conversation request initiated to the callee by the caller, the voice exchanger generates a caller's fictitious addresses and port, and a callee's fictitious addresses and port respectively. For example, the callee's fictitious addresses and port are (10.0.0.40: 7000), and the caller's fictitious addresses and port are (10.0.0.40: 7002).

When generating the fictitious address and port of the caller and the callee, the voice exchanger binds the fictitious ports of the caller and the callee, such as 7000 and 7002, and establishes a mapping table.

In Step 403, the voice exchanger sends the fictitious address and port to the caller and the callee respectively.

The voice exchanger sends the callee's fictitious address and port to the caller, and sends caller's fictitious address and port to the callee. Thus, subsequently, the caller and the callee can send the media stream message to a counterpart according to the fictitious addresses and port.

The fictitious addresses sent by the voice exchanger to the caller and the callee can be forwarded by the NAT device.

In Step 404, the voice exchanger receives media stream messages sent by the caller and media stream messages sent by the callee.

Message keywords included in the media stream messages sent by the caller or the callee include a destination IP address and port, a source MAC address, a source IP address and port. For example, keywords of the media stream message sent by the caller are as shown in the following table.

| Destination MAC | Destination IP address | Destination port | Source MAC | Source IP address | Source port |
|---|---|---|---|---|---|
| Voice exchanger | 10.0.0.40 | 7000 | NATA | 10.0.0.29 | 6500 |

For example, keywords of the media stream message sent by the callee are as shown the following table.

| Destination MAC | Destination IP address | Destination port | Source MAC | Source IP address | Source port |
|---|---|---|---|---|---|
| Voice exchanger | 10.0.0.40 | 7002 | NAT B | 10.0.0.59 | 8500 |

In Step 405, the voice exchanger determines whether the received message is a media stream proxy service.

Because media streams exchanged by the voice exchanger further include a conversation between a narrowband and a broadband besides a media stream proxy, the media stream proxy service is isolated from a narrowband/narrowband conversation service port interval. In this way, after receiving the media stream message, the voice exchanger can determine whether the received message is the media stream proxy service according to the destination port of the received message.

In Step 406, the voice exchanger obtains the callee's NAT address and port or the caller's NAT address and port according to the destination port as an index.

For example, after obtaining the caller's NAT address and port, the voice exchanger saves the address and port in the mapping table. At this time, contents in the mapping table are as shown in the following table.

| Address | Data | | |
|---|---|---|---|
| | Source MAC | Source IP address | Source port |
| 7000 | NAT A | 10.0.0.29 | 6500 |
| 7002 | 0 | 0 | 0 |

After obtaining the callee's NAT address and port, the voice exchanger saves the address and port in the mapping table. At this time, contents in the mapping table are as shown in the following table.

| Address | Data | | |
|---|---|---|---|
| | Source MAC | Source IP address | Source port |
| 7000 | NAT A | 10.0.0.29 | 6500 |
| 7002 | NAT B | 10.0.0.59 | 8500 |

In Step 407, the voice exchanger sends the replaced media stream messages to the caller or the callee.

The voice exchanger replaces the destination address and port in the media stream message and forwards the replaced message to the NAT device, and the NAT device sends the messages to the caller or the callee.

According to a port binding relationship, the voice exchanger can acquire a destination user's NAT address and port to replace the destination address and port in the media stream message. Before replacement, the voice exchanger determines whether the NAT address is obtained. If the NAT address is not obtained, the message is discarded. If the address is obtained, the destination user's fictitious address and port carried in the media stream message is replaced with the destination user's NAT address and port.

For example, message keywords sent to the caller by the voice exchanger are shown in the following table.

| Destination MAC | Destination IP address | Destination port | Source MAC | Source IP address | Source port |
|---|---|---|---|---|---|
| NAT A | 10.0.0.29 | 6500 | Voice exchanger | 10.0.0.40 | 7000 |

Message keywords sent to the callee by the voice exchanger are shown in the following table.

| Destination MAC | Destination IP address | Destination port | Source MAC | Source IP address | Source port |
|---|---|---|---|---|---|
| NATB | 10.0.0.59 | 8500 | Voice exchanger | 10.0.0.40 | 7002 |

In this way, a simple media stream proxy technology integrated in a voice exchanger solves the NAT traversal problem of a VOIP conversation, and provides a high efficient proxy forwarding performance.

According to the embodiment, because the voice exchanger replaces the address and the port in the media stream message, two users located in private networks are enabled to perform a conversation and media stream transmission. Moreover, a dedicated proxy device does not need to be used, so the cost is reduced, and the proxy method also becomes simpler and more convenient.

Further, a simple mapping relationship table is constructed, which is convenient for maintenance, and thus such operations as determining whether the media stream message is a media stream proxy service, establishing a mapping relationship, and acquiring forwarded user information are all only accomplished through a port opened to the user by the voice exchanger, and the port is served as an index, which can be directly read without the need of looking up the table. Therefore, the translation speed is increased and translation time delay is reduced.

Further, such problems as a conversation isolation scenario (such as, two virtual private subnetworks can both visit a public virtual private network area, but cannot visit each other) occurring due to other reasons can also be solved through the media stream proxy.

It should be noted that, for ease of description, the method embodiments hereinbefore are all expressed as a combination of a series of actions, but persons skilled in the art should know that, according to the present invention, some steps can be performed in other sequences or simultaneously, and the present invention is not limited to the described action sequence. Next, persons skilled in the art should also know that, the embodiments described in the specification all fall within preferred embodiments, and the related actions and modules are not necessarily required by the present invention.

In the embodiments, description for the embodiments has its own emphasis, and a part without being described in detail in a certain embodiment can be obtained with reference to relevant description in other embodiments.

A proxy method of a media stream is provided in the foregoing, and in embodiments, the present invention further provides a voice exchanger and a communication system.

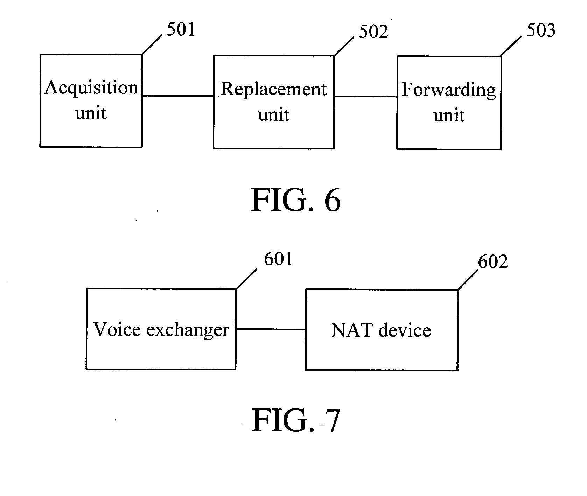

Referring to FIG. 6, a voice exchanger includes an acquisition unit 501, a replacement unit 502, and a forwarding unit 503.

The acquisition unit 501 is configured to acquire address of a callee which has gone through NAT from a media stream message sent by the callee.

The replacement unit 502 is configured to replace a constructed address and constructed port of the callee carried in a media stream message sent by a caller with the address of the callee which has gone through the NAT and is acquired by the acquisition unit 501.

The forwarding unit 503 is configured to send the media stream message sent by the caller to the callee after replacing of the replacement unit 502. The replaced media stream message includes the address of the callee which has gone through the NAT.

The voice exchanger further includes a construction unit and a sending unit.

The construction unit is configured to construct the address and the port of the callee.

The address and the port of the callee are corresponding to the received address of the callee which has gone through the NAT.

The sending unit is configured to send the address and the port of the callee constructed by the construction unit 501 to the registered caller.

In the replacement unit 502, the constructed address and the constructed port of the callee carried in the media stream message sent by the caller are sent to the caller by the voice exchanger through the sending unit.

The voice exchanger further includes a media stream receiving unit.

The media stream receiving unit is configured to receive the media stream message sent by the caller. The media stream message carries the constructed address and the constructed port of the callee.

At this time, the replacement unit 502 is configured to replace the constructed address and the constructed port of the callee carried in the media stream message sent by the caller received by the media stream receiving unit with the address of the callee which has gone through the NAT.

The voice exchanger further includes a determination unit.

The determination unit is configured to determine whether the media stream message is a media stream proxy service according to the constructed port of the callee received by the media stream receiving unit.

The replacement unit 502 is configured to replace the constructed address and the constructed port of the callee carried in the media stream message sent by the caller with the address of the callee which has gone through the NAT and is acquired by the acquisition unit, when the determination unit determines that the media stream message sent by the caller is the media stream proxy service.

The voice exchanger further includes a saving unit.

The saving unit is configured to save an address and port of the caller which have gone through the NAT in a mapping table, when the determination unit determines that the media stream message sent by the caller is the media stream proxy service.

The voice exchanger further includes a receiving unit.

The receiving unit is configured to receive the address of the registered callee which has gone through the NAT.

At this time, the construction unit is configured to construct the address and the port of the callee. The address and the port of the callee are corresponding to the address of the callee which has gone through the NAT received by the receiving unit.

The voice exchanger can be used to realize the proxy method of the media stream according to the embodiment of the present invention, but is not limited to realize the method.

A voice exchanger is described hereinbefore, and a communication system is described hereinafter.

Referring to FIG. 7, a communication system includes a voice exchanger 601 and an NAT device 602.

The voice exchanger 601 is configured to acquire address of a callee which has gone through NAT from a media stream message sent by the callee, replace a constructed address and constructed port of the callee carried in a media stream message sent by a caller with the address of the callee which has gone through the NAT, and send the replaced media stream message sent by the caller to the callee. The replaced media stream message includes the address of the callee which has gone through the NAT.

The NAT device 602 is configured to perform the NAT, send the address of the callee which has gone through the NAT to the voice exchanger 601, and send the media stream message sent by the caller after replacing of the voice exchanger to the callee.

The voice exchanger 601 is further configured to construct the address and the port of the callee, and send the constructed address and the constructed port of the callee to the registered caller.

The voice exchanger 601 is further configured to construct an address and port of the caller, send the constructed address and the constructed port of the caller to the callee, acquire the address of the caller which has gone through the NAT from the media stream message sent by the caller, replace the constructed address and the constructed port of the caller carried in the media stream message sent by the callee with the address of the caller which has gone through the NAT, and send the replaced media stream message sent by the callee to the caller. The replaced media stream message includes the address of the caller which has gone through the NAT.

The NAT device 602 is further configured to send the address of the caller which has gone through the NAT to the voice exchanger, and send the media stream message sent by the callee after replacing of the voice exchanger to the caller.

According to the embodiments of the present invention, the voice exchanger replaces the constructed address and the constructed port of the callee carried in the received media stream message sent by a caller with the address which has gone through the NAT, and sends the replaced media stream message sent by the caller to the callee, so that the conversation isolation problem is solved by only using a media stream proxy, thus simplifying the proxy method. Hence, only the voice exchanger is used, and the media stream proxy can be realized without the need of using a specific proxy device, so as to solve the conversation isolation problem and reduce the cost.

Further, the address of the callee which has gone through the NAT is acquired according to a port index, and can be directly acquired without the need of looking up the table according to a simple mapping relationship, which is convenient for maintenance, increases the translation speed, and reduces time delay.

Persons of ordinary skill in the art may understand that all or part of the steps of the method according to the embodiments of the present invention may be implemented by a program instructing relevant hardware. The program may be stored in a computer readable storage medium. When the procedure is executed, the following steps are included.

The voice exchanger acquires the address of the callee which has gone through the NAT from the media stream message sent by the callee.

The voice exchanger replaces a constructed address and constructed port of the callee carried in a media stream message sent by a caller with the address of the callee which has gone through the NAT.

The voice exchanger sends the replaced media stream message sent by the caller to the callee. The replaced media stream message includes the address of the callee which has gone through the NAT.

The storage medium may be a Read-Only Memory (ROM), a magnetic disk, or an optical disk.

A proxy method of a media stream, a voice exchanger, and a communication system according to the embodiments of the present invention are introduced in detail hereinbefore, and illustration of the foregoing embodiments is only used to help understand the method and the idea of the present invention. Meanwhile, persons having ordinary skill in the art can make variations and modifications to the present invention in terms of the specific implementations and application scopes according to the claims of the present invention. Therefore, the specification shall not be construed as limitations to the present invention.

## Claims

1. A proxy method of a media stream, comprising:
generating (101), by a voice exchanger, a callee's fictitious address and port, after receiving a signaling translated and sent by a NAT device when a caller initiates a conversation with the callee;
sending (102), by the voice exchanger, the callee's fictitious address and port to the registered caller, so that the caller sends a media stream message carrying the callee's fictitious address and port to the callee;
**characterized by**
acquiring (103), by the voice exchanger, the callee's NAT address and port from a media stream message which is sent by the callee and has gone through a NAT device;
replacing (104), by the voice exchanger, the callee's fictitious address and port carried in a media stream message sent by the caller with the callee's NAT address and port; and
sending (105), by the voice exchanger, the replaced media stream message to the callee, wherein the replaced media stream message comprises the callee's NAT address and port.

2. The proxy method according to claim 1, wherein before the replacing the callee's fictitious address and port, the proxy method further comprises:
receiving, by the voice exchanger, the media stream message sent by the caller, wherein the media stream message carries the callee's fictitious address and port.

3. The proxy method according to claim 1, wherein before the generating the callee's fictitious address and port, the proxy method further comprises:
receiving, by the voice exchanger, a registered callee's address and port which has been translated by the NAT device when establishing a conversation; and
the generating the callee's fictitious address and port comprises:
generating, by the voice exchanger, the callee's fictitious address and port corresponding to the registered callee's address and port which has been translated by the NAT device.

4. The proxy method according to one of the claims 1 to 3, wherein after the acquiring the callee's NAT address and port, the proxy method further comprises:
saving the callee's NAT address and port in a mapping table; and
the replacing the callee's fictitious address and port comprises:
acquiring, by the voice exchanger, the callee's NAT address and port from the mapping table according to the callee's fictitious port carried in the received media stream message, and replacing the callee's fictitious address and port with the callee's NAT address and port.

5. The proxy method according to one of the claims 1 to 4, wherein after the receiving the media stream message sent by the caller, the proxy method further comprises:
determining whether the media stream message sent by the caller is a media stream proxy service according to the callee's fictitious port; and
after determining that the media stream message sent by the caller is the media stream proxy service, saving a caller's NAT address and port, which is carried in the media stream message sent by the caller and gone through a NAT device, in a mapping table.

6. The proxy method according to any one of claims 1 to 5, further comprising:
generating, by the voice exchanger, the caller's fictitious address and port; and
sending, by the voice exchanger, the caller's fictitious address and port to the callee, so that the callee sends the media stream message to the caller according to the caller's fictitious address and port.

7. The proxy method according to claim 6, wherein after the sending the caller's fictitious address and port to the callee, the proxy method further comprises:
replacing, by the voice exchanger, the caller's fictitious address and port carried in the media stream message sent by the callee with the caller's NAT address and port; and
sending the replaced media stream message to the caller, wherein the replaced media stream message comprises the caller's NAT address and port.

8. The proxy method according to claim 7, wherein before the replacing the caller's fictitious address and port, the proxy method further comprises:
receiving, by the voice exchanger, the media stream message sent by the callee, wherein the media stream message carries the caller's fictitious address and port.

9. The proxy method according to claim 8, wherein after the receiving the media stream message sent by the callee, the proxy method further comprises:
determining whether the media stream message sent by the callee is the media stream proxy service according to the caller's fictitious port; and
saving the callee's NAT address and port in the mapping table.

10. A voice exchanger, comprising:
a construction unit, configured to generate a callee's fictitious address and port, after receiving a signaling translated and sent by a NAT device when a caller initiates a conversation with the callee;
a sending unit, configured to send the callee's fictitious address and port to the registered caller;
**characterized by**
an acquisition unit (501), configured to acquire the callee's NAT address and port from a media stream message which is sent by the callee and has gone through a NAT device;
a replacement unit (502), configured to replace the callee's fictitious address and port carried in a media stream message sent by the caller with the callee's NAT address and port acquired by the acquisition unit (501); and
a forwarding unit (503), configured to send the replaced media stream message replaced by the replacement unit (502) to the callee, wherein the replaced media stream message comprises the callee's NAT address and port.

11. The voice exchanger according to claim 10, further comprising:
a media stream receiving unit, configured to receive the media stream message sent by the caller, wherein the media stream message carries the callee's fictitious address and port.

12. The voice exchanger according to claim 10 or 11, further comprising:
a determination unit, configured to determine whether the media stream message sent by the caller is a media stream proxy service according to the callee's fictitious port received by the media stream receiving unit; wherein
the replacement unit (502) replaces the callee's fictitious address and port carried in the media stream message sent by the caller with the callee's NAT address and port, when the determination unit determines that the media stream message sent by the caller is the media stream proxy service.

13. The voice exchanger according to claim 12, further comprising:
a saving unit, configured to save a caller's NAT address and port, which is carried in the media stream message sent by the caller and gone through a NAT device, in a mapping table when the determination unit determines that the media stream message sent by the caller is the media stream proxy service.

## Patentansprüche

1. Stellvertreterverfahren eines Medienstreams, umfassend:
Erzeugen (101), durch einen Sprachtauscher, der fiktiven Adresse und des fiktiven Anschlusses eines Angerufenen, nach Empfangen einer von einer NAT-Vorrichtung umgesetzten und gesandten Signalisierung, wenn ein Anrufer eine Konversation mit einem Angerufenen einleitet;
Senden (102), durch den Sprachtauscher, der fiktiven Adresse und des fiktiven Anschlusses des Angerufenen zu dem registrierten Anrufer, so dass der Anrufer eine Medienstream-Nachricht, die die fiktive Adresse und den fiktiven Anschluss des Angerufenen trägt, zu dem Angerufenen sendet;
**gekennzeichnet durch**
Erfassen (103), **durch** den Sprachtauscher, der NAT-Adresse und des NAT-Anschlusses des Angerufenen aus einer Medienstream-Nachricht, die von dem Angerufenen gesandt wird und **durch** eine NAT-Vorrichtung gegangen ist;
Ersetzen (104), **durch** den Sprachtauscher, der fiktiven Adresse und des fiktiven Anschlusses des Angerufenen, die in einer von dem Anrufer gesandten Medienstream-Nachricht getragen werden, **durch** die NAT-Adresse und den NAT-Anschluss des Angerufenen; und
Senden (105), **durch** den Sprachtauscher, der ersetzten Medienstream-Nachricht an den Angerufenen, wobei die ersetzte Medienstream-Nachricht die NAT-Adresse und den NAT-Anschluss des Angerufenen umfasst.

2. Stellvertreterverfahren nach Anspruch 1, wobei das Stellvertreterverfahren vor dem Ersetzen der fiktiven Adresse und des fiktiven Anschlusses des Angerufenen ferner umfasst:
Empfangen, durch den Sprachtauscher, der von dem Anrufer gesandten Medienstream-Nachricht, wobei die Medienstream-Nachricht die fiktive Adresse und den fiktiven Anschluss des Angerufenen trägt.

3. Stellvertreterverfahren nach Anspruch 1, wobei das Stellvertreterverfahren vor dem Erzeugen der fiktiven Adresse und des fiktiven Anschlusses des Angerufenen ferner umfasst:
Empfangen, durch den Sprachtauscher, der Adresse und des Anschlusses eines registrierten Angerufenen, die beim Herstellen einer Konversation durch die NAT-Vorrichtung umgesetzt wurden; und
das Erzeugen der fiktiven Adresse und des fiktiven Anschlusses des Angerufenen umfasst:
Erzeugen, durch den Sprachtauscher, der fiktiven Adresse und des fiktiven Anschlusses des Angerufenen korrespondierend mit der Adresse und dem Anschluss des registrierten Angerufenen, die durch die NAT-Vorrichtung umgesetzt wurden.

4. Stellvertreterverfahren nach einem der Ansprüche 1 bis 3, wobei das Stellvertreterverfahren nach dem Erfassen der NAT-Adresse und des NAT-Anschlusses des Angerufenen ferner umfasst:
Speichern der NAT-Adresse und des NAT-Anschlusses des Angerufenen in einer Abbildungstabelle; und
das Ersetzen der fiktiven Adresse und des fiktiven Anschlusses des Angerufenen umfasst:
Erfassen, durch den Sprachtauscher, der NAT-Adresse und des NAT-Anschlusses des Angerufenen aus der Abbildungstabelle gemäß dem in der empfangenen Medienstream-Nachricht getragenen fiktiven Anschluss des Angerufenen und Ersetzen der fiktiven Adresse und des fiktiven Anschlusses des Angerufenen durch die NAT-Adresse und den NAT-Anschluss des Angerufenen.

5. Stellvertreterverfahren nach einem der Ansprüche 1 bis 4, wobei das Stellvertreterverfahren nach dem Empfangen der von dem Anrufer gesandten Medienstream-Nachricht ferner umfasst:
Bestimmen, ob die von dem Anrufer gesandte Medienstream-Nachricht ein Medienstream-Stellvertreterdienst gemäß dem fiktiven Anschluss des Angerufenen ist; und
nach Bestimmen, dass die von dem Anrufer gesandte Medienstream-Nachricht der Medienstream-Stellvertreterdienst ist, Speichern der NAT-Adresse und des NAT-Anschlusses eines Anrufers, die in der von dem Anrufer gesandten Medienstream-Nachricht getragen werden und durch eine NAT-Vorrichtung gegangen sind, in einer Abbildungstabelle.

6. Stellvertreterverfahren nach einem der Ansprüche 1 bis 5, ferner umfassend:
Erzeugen, durch den Sprachtauscher, der fiktiven Adresse und des fiktiven Anschlusses des Anrufers; und
Senden, durch den Sprachtauscher, der fiktiven Adresse und des fiktiven Anschlusses des Anrufers an den Angerufenen, so dass der Angerufene die Medienstream-Nachricht gemäß der fiktiven Adresse und dem fiktiven Anschluss des Anrufers an den Anrufer sendet.

7. Stellvertreterverfahren nach Anspruch 6, wobei das Stellvertreterverfahren nach dem Senden der fiktiven Adresse und des fiktiven Anschlusses des Anrufers an den Angerufenen ferner umfasst:
Ersetzen, durch den Sprachtauscher, der fiktiven Adresse und des fiktiven Anschlusses des Anrufers, die in der von dem Angerufenen gesandten Medienstream-Nachricht getragen werden, durch die NAT-Adresse und den NAT-Anschluss des Anrufers; und
Senden der ersetzten Medienstream-Nachricht an den Anrufer, wobei die ersetzte Medienstream-Nachricht die NAT-Adresse und den NAT-Anschluss des Anrufers umfasst.

8. Stellvertreterverfahren nach Anspruch 7, wobei das Stellvertreterverfahren vor dem Ersetzen der fiktiven Adresse und des fiktiven Anschlusses des Anrufers ferner umfasst:
Empfangen, durch den Sprachtauscher, der von dem Angerufenen gesandten Medienstream-Nachricht, wobei die Medienstream-Nachricht die fiktive Adresse und den fiktiven Anschluss des Anrufers trägt.

9. Stellvertreterverfahren nach Anspruch 8, wobei das Stellvertreterverfahren nach dem Empfangen der von dem Angerufenen gesandten Medienstream-Nachricht ferner umfasst:
Bestimmen, ob die von dem Angerufenen gesandte Medienstream-Nachricht der Medienstream-Stellvertreterdienst gemäß dem fiktiven Anschluss des Anrufers ist; und
Speichern der NAT-Adresse und des NAT-Anschlusses des Angerufenen in der Abbildungstabelle.

10. Sprachtauscher, umfassend:
eine Konstruktionseinheit, konfiguriert zum Erzeugen der fiktiven Adresse und des fiktiven Anschlusses eines Angerufenen, nach Empfangen einer von einer NAT-Vorrichtung umgesetzten und gesandten Signalisierung, wenn ein Anrufer eine Konversation mit dem Angerufenen einleitet;
eine Sendeeinheit, konfiguriert zum Senden der fiktiven Adresse und des fiktiven Anschlusses des Angerufenen zu dem registrierten Anrufer;
**gekennzeichnet durch**
eine Erfassungseinheit (501), konfiguriert zum Erfassen der NAT-Adresse und des NAT-Anschlusses des Angerufenen aus einer Medienstream-Nachricht, die von dem Angerufenen gesandt wird und **durch** eine NAT-Vorrichtung gegangen ist;
eine Ersetzungseinheit (502), konfiguriert zum Ersetzen der fiktiven Adresse und des fiktiven Anschlusses des Angerufenen, die in einer von dem Anrufer gesandten Medienstream-Nachricht getragen werden, **durch** die NAT-Adresse und den NAT-Anschluss, die von der Erfassungseinheit (501) erfasst wurden; und
eine Weiterleitungseinheit (503), konfiguriert zum Senden der ersetzten Medienstream-Nachricht, die **durch** die Ersetzungseinheit (502) ersetzt wurde, an den Angerufenen, wobei die ersetzte Medienstream-Nachricht die NAT-Adresse und den NAT-Anschluss des Angerufenen umfasst.

11. Sprachtauscher nach Anspruch 10, ferner umfassend:
eine Medienstream-Empfangseinheit, konfiguriert zum Empfangen der von dem Anrufer gesandten Medienstream-Nachricht, wobei die Medienstream-Nachricht die fiktive Adresse und den fiktiven Anschluss des Angerufenen trägt.

12. Sprachtauscher nach Anspruch 10 oder 11, ferner umfassend:
eine Bestimmungseinheit, konfiguriert zum Bestimmen, ob die von dem Anrufer gesandte Medienstream-Nachricht ein Medienstream-Stellvertreterdienst gemäß dem fiktiven Anschluss des Angerufenen, der von der Medienstream-Empfangseinheit empfangen wurde, ist; wobei
die Ersetzungseinheit (502) die fiktive Adresse und den fiktiven Anschluss des Angerufenen, die in der von dem Anrufer gesandten Medienstream-Nachricht getragen werden, durch die NAT-Adresse und den NAT-Anschluss des Angerufenen ersetzt, wenn die Bestimmungseinheit bestimmt, dass die von dem Anrufer gesandte Medienstream-Nachricht der Medienstream-Stellvertreterdienst ist.

13. Sprachtauscher nach Anspruch 12, ferner umfassend:
eine Speichereinheit, konfiguriert zum Speichern der NAT-Adresse und des NAT-Anschlusses eines Anrufers, die in der von dem Anrufer gesandten Medienstream-Nachricht getragen werden und durch eine NAT-Vorrichtung gegangen sind, in einer Abbildungstabelle, wenn die Bestimmungseinheit bestimmt, dass die von dem Anrufer gesandte Medienstream-Nachricht der Medienstream-Stellvertreterdienst ist.

## Revendications

1. Procédé d'utilisation de mandataire d'un flux multimédia, comprenant :
la génération (101), par un échangeur vocal, d'une adresse et d'un port fictifs d'un appelé, après réception d'une signalisation traduite et envoyée par un dispositif NAT lorsqu'un appelant établit une conversation avec l'appelé ;
l'envoi (102), par l'échangeur vocal, de l'adresse et du port fictifs de l'appelé à l'appelant enregistré, de manière à ce que l'appelant envoie à l'appelé un message de flux multimédia transportant l'adresse et le port fictifs de l'appelé ;
**caractérisé par**
l'acquisition (103), par l'échangeur vocal, de l'adresse et du port NAT de l'appelé à partir d'un message de flux multimédia qui est envoyé par l'appelé et est passé à travers un dispositif NAT ;
le remplacement (104), par l'échangeur vocal, de l'adresse et du port fictifs de l'appelé transportés dans un message de flux multimédia envoyé par l'appelant par l'adresse et le port NAT de l'appelé ; et
l'envoi (105) à l'appelé, par l'échangeur vocal, du message de flux multimédia remplacé, le message de flux multimédia remplacé comprenant l'adresse et le port NAT de l'appelé.

2. Procédé d'utilisation de mandataire selon la revendication 1, dans lequel, avant de remplacer l'adresse et le port fictifs de l'appelé, le procédé d'utilisation de mandataire comprend en outre :
la réception, par l'échangeur vocal, du message de flux multimédia envoyé par l'appelant, le message de flux multimédia transportant l'adresse et le port fictifs de l'appelé.

3. Procédé d'utilisation de mandataire selon la revendication 1, dans lequel, avant de générer l'adresse et le port fictifs de l'appelé, le procédé d'utilisation de mandataire comprend en outre :
la réception, par l'échangeur vocal, d'une adresse et d'un port d'appelé enregistré ayant été traduits par le dispositif NAT lors de l'établissement d'une conversation ; et
la génération de l'adresse et du port fictifs de l'appelé comprend :
la génération, par l'échangeur vocal, de l'adresse et du port fictifs de l'appelé correspondant à l'adresse et au port de l'appelé enregistré ayant été traduits par le dispositif NAT.

4. Procédé d'utilisation de mandataire selon l'une des revendications 1 à 3, dans lequel, après l'acquisition de l'adresse et du port NAT de l'appelé, le procédé d'utilisation de mandataire comprend en outre :
la sauvegarde de l'adresse et du port NAT de l'appelé dans une table de correspondance ; et
le remplacement de l'adresse et du port fictifs de l'appelé comprend :
l'acquisition, par l'échangeur vocal, de l'adresse et du port NAT de l'appelé à partir de la table de correspondance conformément au port fictif de l'appelé transporté dans le message de flux multimédia reçu, et le remplacement de l'adresse et du port fictifs de l'appelé par l'adresse et le port NAT de l'appelé.

5. Procédé d'utilisation de mandataire selon l'une des revendications 1 à 4, dans lequel, après la réception du message de flux multimédia envoyé par l'appelant, le procédé d'utilisation de mandataire comprend en outre :
la détermination du fait que le message de flux multimédia envoyé par l'appelant est ou non un service de mandataire de flux multimédia conformément au port fictif de l'appelé ; et
après détermination du fait que le message de flux multimédia envoyé par l'appelant est le service de mandataire de flux multimédia, la sauvegarde de l'adresse et du port NAT d'un appelant, qui sont transportés dans le message de flux multimédia envoyé par l'appelant et passé à travers un dispositif NAT, dans une table de correspondance.

6. Procédé d'utilisation de mandataire selon l'une quelconque des revendications 1 à 5, comprenant en outre :
la génération, par l'échangeur vocal, de l'adresse et du port fictifs de l'appelant ; et
l'envoi à l'appelé, par l'échangeur vocal, de l'adresse et du port fictifs de l'appelant, de manière à ce que l'appelé envoie à l'appelant le message de flux multimédia conformément à l'adresse et au port fictifs de l'appelant.

7. Procédé d'utilisation de mandataire selon la revendication 6, dans lequel, après l'envoi à l'appelé de l'adresse et du port fictifs de l'appelant, le procédé d'utilisation de mandataire comprend en outre :
le remplacement, par l'échangeur vocal, de l'adresse et du port fictifs de l'appelant transportés dans le message de flux multimédia envoyé par l'appelé par l'adresse et le port NAT de l'appelant ; et
l'envoi à l'appelant du message de flux multimédia remplacé, le message de flux multimédia remplacé comprenant l'adresse et le port NAT de l'appelant.

8. Procédé d'utilisation de mandataire selon la revendication 7, dans lequel, avant de remplacer l'adresse et le port fictifs de l'appelant, le procédé d'utilisation de mandataire comprend en outre :
la réception, par l'échangeur vocal, du message de flux multimédia envoyé par l'appelé, le message de flux multimédia transportant l'adresse et le port fictifs de l'appelant.

9. Procédé d'utilisation de mandataire selon la revendication 8, dans lequel, après la réception du message de flux multimédia envoyé par l'appelé, le procédé d'utilisation de mandataire comprend en outre :
la détermination du fait que le message de flux multimédia envoyé par l'appelé est ou non le service de mandataire de flux multimédia conformément au port fictif de l'appelant ; et
la sauvegarde de l'adresse et du port NAT de l'appelé dans la table de correspondance.

10. Echangeur vocal, comprenant :
une unité de construction, configurée pour générer l'adresse et le port fictifs d'un appelé, après réception d'une signalisation traduite et envoyée par un dispositif NAT lorsqu'un appelant établit une conversation avec l'appelé ;
une unité d'envoi, configurée pour envoyer à l'appelant enregistré l'adresse et le port fictifs de l'appelé ;
**caractérisé par** :
une unité d'acquisition (501), configurée pour acquérir l'adresse et le port NAT de l'appelé à partir d'un message de flux multimédia qui est envoyé par l'appelé et est passé à travers un dispositif NAT ;
une unité de remplacement (502), configurée pour remplacer l'adresse et le port fictifs de l'appelé transportés dans un message de flux multimédia envoyé par l'appelant par l'adresse et le port NAT de l'appelé acquis par l'unité d'acquisition (501) ; et
une unité de réacheminement (503), configurée pour envoyer à l'appelé le message de flux multimédia remplacé au moyen de l'unité de remplacement (502), dans lequel le message de flux multimédia remplacé comprend l'adresse et le port NAT de l'appelé.

11. Echangeur vocal selon la revendication 10, comprenant en outre :
une unité de réception de flux multimédia, configurée pour recevoir le message de flux multimédia envoyé par l'appelant, le message de flux multimédia transportant l'adresse et le port fictifs de l'appelé.

12. Echangeur vocal selon la revendication 10 ou 11, comprenant en outre :
une unité de détermination, configurée pour déterminer si le message de flux multimédia envoyé par l'appelant est un service de mandataire de flux multimédia conformément au port fictif de l'appelé reçu par l'unité de réception de flux multimédia ; dans lequel
l'unité de remplacement (502) remplace l'adresse et le port fictifs de l'appelé transportés dans le message de flux multimédia envoyé par l'appelant par l'adresse et
le port NAT de l'appelé, lorsque l'unité de détermination détermine que le message de flux multimédia envoyé par l'appelant est le service de mandataire de flux multimédia.

13. Echangeur vocal selon la revendication 12, comprenant en outre :
une unité de sauvegarde, configurée pour sauvegarder l'adresse et le port NAT d'un appelant, qui sont transportés dans le message de flux multimédia envoyé par l'appelant et passé à travers un dispositif NAT, dans une table de correspondance lorsque l'unité de détermination détermine que le message de flux multimédia envoyé par l'appelant est le service de mandataire de flux multimédia.
